(19) Europäisches Patentamt / European Patent Office / Office européen des brevets

(11) **EP 2 518 124 B1**

(12) **EUROPEAN PATENT SPECIFICATION**

(45) Date of publication and mention
of the grant of the patent:
**07.04.2021   Bulletin 2021/14**

(21) Application number: **10839499.0**

(22) Date of filing: **22.12.2010**

(51) Int Cl.:
***F16D 69/02*** *(2006.01)*

(86) International application number:
**PCT/JP2010/073224**

(87) International publication number:
**WO 2011/078269 (30.06.2011 Gazette 2011/26)**

(54) **METHOD FOR PRODUCING A FRICTION MATERIAL**

VERFAHREN ZUR HERSTELLUNG EINES REIBUNGSMATERIALS

PROCÉDÉ DE PRODUCTION D'UN MATÉRIAU DE FROTTEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2009   JP 2009290886**

(43) Date of publication of application:
**31.10.2012   Bulletin 2012/44**

(73) Proprietor: **Akebono Brake Industry Co., Ltd.
Tokyo 103-8534 (JP)**

(72) Inventors:
• **TAKAHASHI, Yuki
  Tokyo 103-8534 (JP)**
• **KURIHARA, Shou
  Tokyo 103-8534 (JP)**

(74) Representative: **Grünecker Patent- und
Rechtsanwälte
PartG mbB
Leopoldstraße 4
80802 München (DE)**

(56) References cited:
**EP-A1- 0 699 728      DE-A1- 19 823 521
JP-A- 6 048 837        JP-A- 7 190 115
JP-A- 11 132 270       JP-A- 2002 201 294
JP-A- 2002 255 651     JP-A- 2003 156 088
JP-A- 2003 192 460     JP-A- 2006 511 417
JP-A- 2009 067 626     US-A1- 2005 276 961**

**Description**

TECHNICAL FIELD

The present invention is related to a method for producing a friction material for a brake used in automobiles, railroad vehicles, airplanes, and industrial machines, particularly, a friction material allowing for compact/lightweight configuration and having excellent heat resistance capable to withstand high temperatures/high loads.

BACKGROUND ART

The friction material used mainly in automobiles and the like is molded using a thermosetting resin typified by a phenol resin as a binding material (binder) and since the binding material is an organic material, this friction material is burdened with a problem of reduction in the friction coefficient during high-speed braking or sticking of the friction material due to thermal deformation or deterioration of the organic material by a braking heat. With the progress of compact/lightweight configuration for the energy-saving purpose, the load imposed on the friction material, in terms of the performance required of the friction material, is recently becoming all the more severe. In order to solve these problems, for example, a copper-based sintered alloy friction material, a C/C composite, CMC (ceramic matrix composite), and a friction material formed by baking and carbonizing an organic material have been proposed in Patent Documents 1 to 3.

However, these friction materials are still burdened with a problem such as production process difficulty, high energy in the production, and high cost compared with conventional products.

Also, in Patent Documents 1 and 2, a friction material using a binding material obtained by sintering/carbonizing a pitch-containing organic material has been proposed. Generally, in the case of producing a friction material by baking and carbonizing an organic material to serve as a binding material, raw materials such as organic material, inorganic filler, solid lubricant and metal material are mixed, and the mixture is held after raising the temperature to approximately from 550 to 1,000°C while applying a necessary load in any one atmosphere of vacuum, reducing gas and inert gas. As a result, the organic material is baked and carbonized and functions as a binding material, whereby a friction material is produced. However, when a pitch is blended as a binder, the baked friction material comes to contain a slight amount of benzopyrene that is a harmful component, and its use may be restricted in view of recent environmental regulations. In case of prohibition of the use in the future, an alternate raw material as a binder of a baked friction material is required.

On the other hand, a friction material for a general disc brake is molded using, as a binding material, a thermosetting resin typified by a phenol resin, but a gas is generated due to a thermosetting reaction of the organic binding material in the thermoforming process. The gas generated is confined inside the thermoformed friction material and if the gas pressure is excessively large, the gas is released in a burst manner when depressurizing the press and gives rise to cracking or bulging.

Patent Document 4 describes a technique for providing a friction material reduced in the volatilized content during high-temperature operation and excellent in the fade resistance and wear resistance by incorporating an organometallic compound together with a thermosetting resin, but even in a friction material using such an inorganic binder, the same phenomenon occurs.

As the solution to cracking or bulging of a friction material using a phenol resin or the like as a binder, Patent Document 5 describes a method where the punch material of the thermoforming mold is changed to a material increased in the thermal conductivity and discharge of a generated gas is promoted by providing a temperature gradient. Also, Patent Document 6 describes a solution where pressurization and depressurization are repeated during molding and abrupt gas expansion is prevented by controlling the release of pressure at the depressurization.

Patent Document 7 describes a method for degassing a friction material in the thermoforming process, wherein at the time of thermoforming a preformed body of raw materials of a friction material by using a friction material-thermoforming mold comprising a stamping mold, a middle mold and a pressurized mold, a temperature difference is imparted between the stamping mold and the pressurized mold and while the preformed body in a portion to be finally cured during thermoforming is moved to either one of the stamping mold and the pressurized mold, a projection having a degassing passage entering the final curing part and communicating with the outside of the mold is provided in the stamping mold or pressurized mold corresponding to the final curing part, thereby enabling degassing of the final curing part.

However, use of these methods is still insufficient, and it is confirmed that there is a case where the product after the completion of thermoforming gradually expands or bulges. Thus, application of the countermeasures above cannot be a solution. EP 0 699 728 relates to binder compositions for friction materials, and a friction material. DE 198 23 521 discloses a method for producing carbon composite material and/or materials containing carbon, carbidic and/or carbonitridic material.

US 2005/0276961 is directed to materials and methods for manufacture of ceramic matrix composites.

RELATED ART

PATENT DOCUMENT

Patent Document 1: JP-A-2006-306970
Patent Document 2: JP-A-11-132270
Patent Document 3: JP-A-3-51531
Patent Document 4: JP-A-7-292349
Patent Document 5: JP-A-2003-232392
Patent Document 6: JP-A-2003-145565
Patent Document 7: JP-A-2003-127155

SUMMARY OF THE INVENTION

PROBLEMS THAT THE INVENTION IS TO SOLVE

As described above, in the case of producing a disc brake pad capable to withstand high temperatures/high loads, a binding material is baked/carbonized to make a friction material, but there is practically a problem such as production process difficulty, high energy consumption in the production, and high cost compared with conventional products. In this connection, when a highly heat-resistant pad producible only by adding a baking step to the same production process as that for an organic friction material (NAO material, Non-Asbestos-Organic) can be provided, the problem of high energy-consuming production can be solved.

In a friction material using an inorganic binder, it is confirmed that there is a case where the product after the completion of thermoforming according to the conventional molding method gradually expands or bulges, and application of various countermeasures cannot be a solution. Therefore, the object of the present invention is to develop a molding method for obtaining a friction material with excellent quality, where the problem of bulging of the product after thermoforming can be eliminated.

MEANS FOR SOLVING THE PROBLEMS

The present inventors have made a variety of studies on molding conditions and various binders of the friction material so as to produce a highly heat-resistant friction material or a baked friction material by the existing production process, as a result, the objects of the present invention are defined by the claims.

ADVANTAGE OF THE INVENTION

The binder is changed to a silicon-containing polymer from an organic material such as straight phenol resin, and this allows formation of a matrix strengthening mechanism by the crosslinking with oxygen, so that the heat resistance can be increased higher than that of conventional friction materials. Also, when the silicon-containing polymer is heated in an oxidizing atmosphere, the polymer is kept from flowing out during heat treatment and therefore, can be used as a binder for a friction material. In particular, by controlling the temperature rise rate of the heat treatment to a low rate or by using millimeter-wave heating, outflow of the silicon-containing polymer can be more successfully suppressed.

Furthermore, the production thereof requires use of only conventional existing equipment, and this keeps the production cost in the same level and involves no need for equipment investment.

Also, although use of a pitch as a binder of a baked friction material may be associated with release of a slight amount of benzopyrene that is a harmful component, when the pitch is changed to a silicon-containing polymer, the friction material can be used as a baked friction material free from environmental contamination and excellent in heat resistance.

In the case of using a silicon-containing polymer as a binder of a friction material, generation of cracking or bulging cannot be completely prevented, but when a silicon-containing polymer is used and preforming is performed under a high pressure, the thickness change during thermoforming is reduced, and since the discharge port for gas is not blocked, cracking or bulging is prevented from occurring, so that a friction material with excellent quality can be produced. Also, near net-shape forming is possible, and flaking is less likely to occur as compared with normal preformed product, as a result, good handling is offered.

BRIEF DESCRIPTION OF THE DRAWINGS

[Fig. 1] A view showing the results of TG (thermogravimetric analysis) of straight phenol and polycarbosilane in air.
[Fig. 2] Electron micrographs showing mapping of silicon element in (a) the friction material heat-treated without controlling the temperature rise rate (Example 5) and (b) the friction material heat-treated by controlling the temperature rise rate (Example 8).
[Fig. 3] Electron micrographs showing mapping of silicon element in (a) the friction material heat-treated by controlling the temperature rise rate (Example 9) and (b) the friction material heat-treated by millimeter-wave heating (Example 10).

MODE FOR CARRYING OUT THE INVENTION

The mode for carrying out the present invention is described in detail below.

As the silicon-containing polymer for use in the present invention, there can be used, for example, a silicon-containing polymer known as a ceramic precursor, which is used in a method involving direct shaping and baking or a method involving impregnation of a preform and then ceramicization by thermal decomposition, at the production of a ceramic product composed of SiC.

There are known a case of impregnating a porous carbon fiber with a silicon-containing polymer, producing a porous C-C initial body by thermal decomposition, and impregnating the porous C-C initial body with liquid silicon (silicon-containing polymer) under heating to effect ceramicization into SiC, thereby producing a friction material (see, Patent Document 2), and a case of using a silicon-containing polymer as a binder, and crosslinking a thermosetting resin and the silicon-containing polymer (see, Patent Document 4). However, a friction material using the polymer above as a binder and having an Si-C network formed through thermoforming, infusiblization by a heat treatment in an oxidizing atmosphere to cause crosslinking with oxygen, and a baking treatment, has not been reported.

The characteristic feature of the present invention is to produce a friction material using a silicon-containing polymer as a binder only by adding a baking step to the same production method as in the case of an organic friction material containing a phenol resin as a binder.

Specifically, the silicon-containing polymer includes thermally decomposable polymers consisting of the groups of polycarbosilane, polyorganoborosilazane, polyborosiloxane, polycarbosilazane, and perhydropolysilazane.

In the present invention, all binders need not be the silicon-containing polymer, and other resins may be used in combination together with the silicon-containing polymer. This is described later.

Considering the cost and high availability, among the above-described silicon-containing polymers, the binder for use in the present invention is preferably polycarbosilane. The polycarbosilane for use in the present invention is, for example, an organic silicon polymer containing at least 30 mass% or more of a repeating unit represented by the following formula I, II or III:

Formula I          $(-CH_2-SiR^1R^2)_n$

Formula II         $(-SiR^1R^2)_n$

Formula III        $(-SiR^1R^2C_6H_4-)_n$

(wherein $R^1$ represents a hydrogen atom, an alkyl group or a hydroxyl group, $R^2$ represents an alkyl group, a phenyl group or a halogen atom, and n represents an integer).

The polycarbosilane may be a homopolymer, a copolymer, a block form, a graft form or a blend form. The number average molecular weight of the polycarbosilane for use in the present invention is usually from 500 to 10,000.

The production process for the friction material of the present invention usually comprises respective steps of blending of raw materials for a friction material, mixing, preforming, thermoforming, heating, baking and grinding, and is the same as the production process for the conventional friction material.

In an embodiment, the production process is applied to production of a friction material for a brake, such as brake pad of a disc brake device and brake lining of a drum brake device, which are mounted, for example, in a vehicle, and is implemented by performing, in order, a blending/mixing step of mixing various powder-particle constituent components (raw materials) in a predetermined ratio to form a friction material matrix, a preforming step of charging the friction material matrix into a preforming mold and compression-molding it to obtain a preformed body with a predetermined shape, a thermoforming step of charging the preformed body into a thermoforming mold and applying a thermoforming treatment at predetermined molding pressure and temperature to obtain a thermoformed body molded in a predetermined friction material shape, and a post-treatment step of appropriately subjecting the thermoformed body to a post-heat treatment, and a grinding treatment to complete a friction material having a desired shape.

In the present invention, a heat treatment in an oxidizing atmosphere and a baking treatment are performed as the post-heat treatment. The silicon-containing polymer is infusiblized and crosslinked with oxygen by the heat treatment in an oxidizing atmosphere, and thereafter, a network-like silicon-carbon (Si-C network) structure is constructed in the binder by the baking treatment.

Incidentally, in the normal thermoforming step, with use of a thermoforming apparatus, a pressure molding treatment of molding a preformed body and a depressurization (degassing) treatment of releasing the molding pressure are alternately performed by repeating the operation an appropriate number of times, and in the depressurization treatment, the gas generated in the thermoforming mold is discharged by opening the thermoforming mold.

Also, the conditions in preforming, heating and compression molding, heat treatment in oxidizing atmosphere, and baking are not particularly limited, but at the thermoforming, molding is preferably performed under the conditions of a temperature of 150 to 180°C, an applied pressure of 30 to 50 MPa, and a pressurization time of 300 to 500 sec.

The heat treatment in an oxidizing atmosphere is preferably performed under the conditions of 160 to 350°C (preferably from 160 to 300°C), an applied pressure of 0.1 to 0.3 MPa, and a treatment time of 1 to 10 hours. With the conditions in these ranges, outflow of the silicon-containing polymer is suppressed, and good dimensional stability is obtained.

Furthermore, the heat treatment in an oxidizing atmosphere is preferably performed by at least either one method of (i) a method of controlling the temperature rise rate to a low rate and (ii) a method of performing the heat treatment by millimeter-wave heating, which are described below, because outflow of the silicon-containing polymer can be more reduced and a product with stable quality can be produced. Also, the residue of the inorganic component contained in the binder is increased, and a denser ceramic network can be formed.

(i) Perform the heat treatment in an oxidizing atmosphere by controlling the temperature rise rate to a low rate

For example, heating is performed under a pressure of 0.1 to 0.3 MPa at a temperature rate of 14 to 140°C per hour for 1 to 10 hours until reaching 300°C, whereby outflow of the silicon-containing polymer can be successfully suppressed. Also, as described above, the heat treatment in an oxidizing atmosphere is performed at 160 to 300°C.

(ii) Perform the heat treatment in an oxidizing atmosphere by millimeter-wave heating

The millimeter-wave indicates an electromagnetic wave having a frequency of 20 to 300 GHz (that is, a wavelength of 15 to 1 mm), and the millimeter-wave heating indicates dielectric heating using an electromagnetic wave in the millimeter-wave band. The millimeter-wave heating can be performed by using a millimeter-wave heating apparatus using a gyrotron oscillator.

For example, heating at 250 to 350°C under a pressure of 0.1 to 0.3 MPa for a treatment time of 1 to 5 hours is preferred. By performing the millimeter-wave heating, as described above, reduction of outflow of the silicon-containing polymer and formation of a dense ceramic network are achieved and at the same time, the heat treatment time can be shortened.

The baking is preferably performed in any one atmosphere of vacuum, reducing gas and inert gas, under the conditions of a temperature of 800 to 1,000°C, an applied pressure of 0.5 MPa and a treatment time of 1 to 2 hours.

The baking temperature in the range above is preferred, because when 800°C or more, an adequate Si-C strong network is achieved and when 1,000°C or less, a stable friction performance is obtained without involving loss or elution of other raw materials blended. In addition, a mechanical strength sufficient as a friction structure is also obtained.

As to the baking time (keeping time), in order to complete the reaction for forming a network of Si component and at the same time, in consideration of physical property stability, a keeping time of 1 hour or more is preferred. A baking time exceeding 2 hours results in excessively high energy-consuming production, and this is not preferred in view of cost. In the baking step, expansion of the sample may occur and therefore, a load of about 0.5 MPa is preferably applied to enhance the dimensional stability.

Various blending materials are used so as to ensure desired friction material characteristics, and as the fibrous material, a metal fiber such as copper fiber and steel fiber is suitable in terms of impact strength, and temperature.

Considering heat resistance, an inorganic material is used. The inorganic material includes zirconia, alumina, titania, magnesia, calcium fluoride, boron nitride, and SiC.

As the friction modifier, a material selected from the group of graphite, iron, aluminum, copper, brass and bronze as well as combinations thereof is used. In the case of using such a material in practice, a plurality of kinds of materials may be used in combination by taking into consideration various shapes and sizes, such as particle and fiber, in addition to powder.

In the present invention, a silicon-containing polymer is used as a binder, and as long as the performance of the friction material is not impaired, other organic resins may be used in combination. The other binder may be selected from conventionally known thermosetting resins such as phenol resin (straight phenol resin), furan resin, xylene resin, urea resin, melamine resin, aniline resin, unsaturated polyester resin, polyimide resin and epoxy resin, but in view of high availability and easy handleability, a phenol resin is preferred. The mixing ratio of such a resin is up to about 50 mass% of the binder.

As for the friction material composition, various blending compositions may be selected. That is, one kind thereof may be used alone, or two or more kinds may be used in combination and mixed, according to friction characteristics required of the product, such as friction coefficient, wear resistance, vibration property and friction noise property.

A blending composition of the present invention contains from 30 to 50 mass% of a fibrous material, from 15 to 30 mass% of an inorganic material, from 5 to 10 mass% of a binder, and from 1 to 10 mass% of a metal powder, assuming that the entire blending material for the friction material is 100 mass%.

EXAMPLES

The present invention is described in greater detail below.

Various evaluations of the friction material were made according to the following measuring methods.

1) Performance Test (in accordance with JASO C406-82)

The produced sample was worked into a test piece (13×35 mm) and subjected to a performance test using a small-size dynamometer inertia-type friction tester. The results of second effectiveness and 1st fade are shown in Table 1.

(1st Fade Test Method)

Initial speed: 100 km/h $\rightarrow$ 3 km/h

Deceleration: 0.45 G

Number of brakes: 9

Braking cycle: 35 seconds

Here,

$$\text{fading ratio (\%)} = [(\text{min } \mu \text{ (minimum } \mu))/\text{first } \mu] \times 100.$$

The $IBT_{max}$ rotor temperature is the initial temperature at 1st braking, and the $FBT_{max}$ rotor temperature is the initial temperature at 9th braking.

2) Measurement of Wear Amount of Rotor/Pad

After the completion of performance test, the wear amount ($\mu$m) of rotor/pad was measured, and the rotor aggressiveness (opposite material aggressiveness) was evaluated.

3) Preformability

The shape of the preformed body obtained by preforming was evaluated on a 3-grade scale of "A: good", "B: passed", and "C: bad".

4) Thermoformability

The shape of the thermoformed body obtained by thermoforming was evaluated on a 3-grade scale of "A: good", "B: passed", and "C: bad".

5) Bulging After Heating

The bulging of the friction material after heat treatment was evaluated on a 2-grade scale of "bulged" and "none".

6) Measurement of Hardness

The Rockwell hardness HRR was measured.

<Example 1>

The prototype conditions/production flow of Example 1 are as follows.

1. Mixing of Raw Materials

Polycarbosilane (specific gravity: 1.1, average particle diameter: 10 $\mu$m), straight phenol resin (novolak type), graphite, alumina, steel wool and aluminum powder each in the blending amount shown in Table 1 were charged into an Eirich mixer and mixed/agitated at ordinary temperature for 2 minutes by setting the chopper rotation speed to 1,500 rpm and the pan rotation speed to 42 rpm. Incidentally, in Comparative Example 1, pitch was used as the binder in place of polycarbosilane, and the blending amounts were changed to 3 mass% of straight phenol resin and 7 mass% of pitch.

[Table 1]

Table 1

| | | Example 1 | Comparative Example 1 |
|---|---|---|---|
| Blending of raw materials, blending amount (mass%) | Straight phenol | 5 | 3 |
| | Pitch | 0 | 7 |
| | Polycarbosilane | 5 | 0 |
| | Graphite | 29 | 29 |
| | Alumina | 19 | 19 |
| | Steel wool | 38 | 38 |
| | Aluminum powder | 4 | 4 |
| Preformability | A: good, B: passed, C: bad | A | A |
| Thermoformability | A: good, B: passed, C: bad | A | A |
| Bulging after heating | bulged/none | none | none |
| Hardness (HRR) | After thermoforming | 81 | 84 |
| | After baking | 86 | 80 |
| Thickness (mm) | After thermoforming | 13.20 | 13.70 |
| | After baking | 13.86 | 14.45 |
| Weight (g) | After thermoforming | 128.02 | 129.98 |
| | After heating | 129.18 | 126.21 |
| Second effectiveness | 50 km/h | 0.46 | 0.42 |
| | 100 km/h | 0.51 | 0.48 |
| | 130 km/h | 0.45 | 0.42 |

(continued)

|  |  | Example 1 | Comparative Example 1 |
|---|---|---|---|
| 1st Fade | min $\mu$ | 0.46 | 0.42 |
|  | Fading ratio [%] | 94 | 101 |
|  | $IBT_{max}$ Rotor temperature (°C) | 534 | 528 |
|  | $FBT_{max}$ Rotor temperature (°C) | 660 | 659 |
| Wear amount of pad (mm) | | 0.24 | 0.21 |
| Wear amount of rotor ($\mu$m) | | 7.50 | 6.60 |

2. Preforming

The mixture above was charged into a mold of a preforming press and pressed by a 20-t press under 25 MPa at ordinary temperature for 5 seconds to produce a sample (sample size: 100×50 mm).

3. Thermoforming

Thermoforming was performed by a small hot press device at a molding temperature of 160°C under a surface pressure of 50 MPa for a molding time of 430 seconds.

4. Heat Treatment

The treatment was performed in a heating furnace at a heating temperature of 300°C for a treatment time of 10 hours under a pressure of 0.2 MPa in an oxidizing atmosphere.

5. Baking

Baking was performed in a baking furnace at a heating temperature of 800°C for a treatment time of 1 hour under a pressure of 0.5 MPa in an argon gas atmosphere.

As for the finished molded product, a sample using polycarbosilane and straight phenol resin as the binder (Example 1) was obtained. Also, a sample with the same blending as in Example 1 except for changing the binder to pitch and straight phenol resin (Comparative Example 1) was produced.

[Evaluation Results of Physical Properties]

Various physical properties after thermoforming, after heating and after baking in Example 1 and Comparative Example 1 are shown in Table 1. In Example 1, owing to heat treatment performed in an oxidizing atmosphere, a sample having physical properties comparable to those in Comparative Example 1 could be obtained.

Also, in Comparative Example 1, the weight was decreased after heating, but in Example 1, owing to heating in an oxidizing atmosphere, the oxidation reaction was accelerated and the Si component constituting the polycarbosilane was crosslinked with oxygen in the atmosphere, as a result, decrease in weight was not observed.

These results reveal that strengthening of the matrix was promoted and physical properties comparable to those in Comparative Example 1 could be ensured.

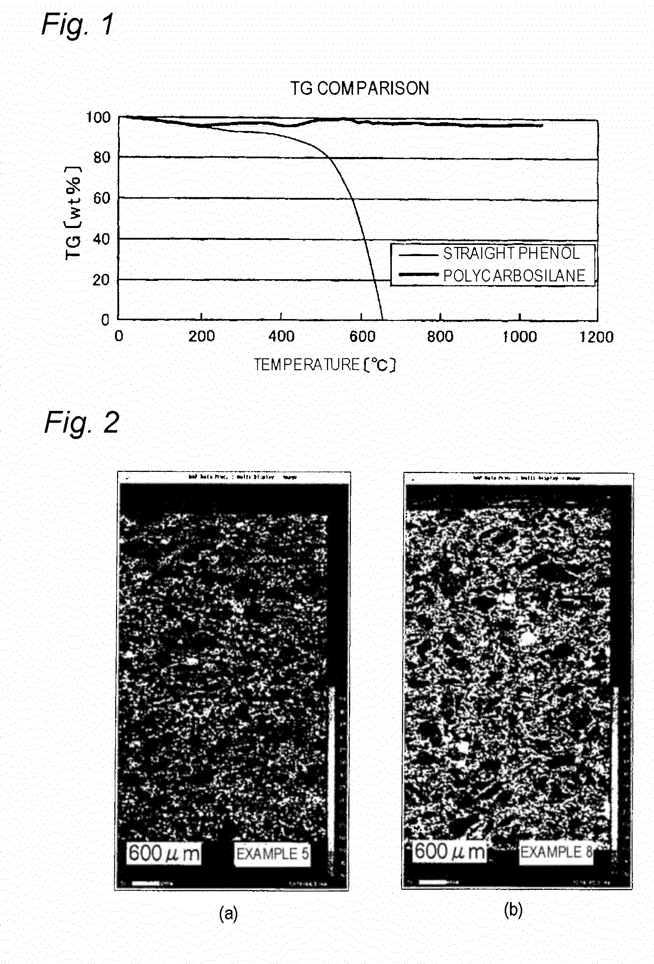

Fig. 1 shows the results of the comparison of TG (thermogravimetric analysis) in air between straight phenol resin and polycarbosilane. The straight phenol resin undergoes a marked weight loss at near 600°C and finally disappears, whereas polycarbosilane scarcely loses the weight even at 600°C or more. This is considered to occur because resulting from reaction of the Si component with oxygen to form $SiO_2$, the polycarbosilane maintains thermal stability and is kept from loss of weight. For this reason, a friction material with excellent thermal stability can be more successfully produced by using polycarbosilane as the binder than using normal straight phenol resin.

<Example 2>

The prototype conditions/production flow of Example 2 are as follows.

1. Mixing of Raw Materials

Polycarbosilane (specific gravity: 1.1, average particle diameter: 10 $\mu$m), straight phenol resin (novolak type), graphite, alumina, steel wool and aluminum powder each in the blending amount shown in Table 2 were charged into an Eirich mixer and mixed/agitated at ordinary temperature for 2 minutes by setting the chopper rotation speed to 1,500 rpm and the pan rotation speed to 42 rpm. Incidentally, in Comparative Example 2, only straight phenol resin was used as the binder in place of polycarbosilane and straight phenol resin of Example 2.

[Table 2]

Table 2

| | | Example 2 | Comparative Example 2 |
|---|---|---|---|
| Blending of raw materials, blending amount (mass%) | Straight phenol | 3 | 10 |
| | Pitch | 0 | 0 |
| | Polycarbosilane | 7 | 0 |
| | Graphite | 29 | 29 |
| | Alumina | 19 | 19 |
| | Steel wool | 38 | 38 |
| | Aluminum powder | 4 | 4 |
| Preformability | A: good, B: passed, C: bad | A | A |
| Thermoformability | A: good, B: passed, C: bad | B | A |
| Bulging after heating | bulged/none | none | none |
| Hardness (HRR) | After thermoforming | 25 | 100 |
| | After baking | 84 | 53 |
| Thickness (mm) | After thermoforming | 14.02 | 14.80 |
| | After baking | 14.05 | 15.20 |
| Second effectiveness | 50 km/h | 0.47 | 0.48 |
| | 100 km/h | 0.54 | 0.50 |
| | 130 km/h | 0.47 | 0.45 |
| 1st Fade | min $\mu$ | 0.48 | 0.27 |
| | Fading ratio [%] | 94 | 60 |
| | IBT$_{max}$ Rotor temperature (°C) | 475 | 510 |
| | FBT$_{max}$ Rotor temperature (°C) | 509 | 565 |
| Wear amount of pad (mm) | | 0.21 | 0.35 |
| Wear amount of rotor ($\mu$m) | | 6.55 | 1.65 |

2. Preforming

The mixture above was charged into a mold of a preforming press and pressed by a 20-t press under 25 MPa at ordinary temperature for 5 seconds to produce a sample (sample size: 100×50 mm).

3. Thermoforming

Thermoforming was performed by a small hot press device at a molding temperature of 160°C under a surface pressure of 50 MPa for a molding time of 430 seconds.

4. Heat Treatment

The treatment was performed in a heating furnace at a heating temperature of 300°C for a treatment time of 10 hours under a pressure of 0.2 MPa in an oxidizing atmosphere.

5. Baking

Baking was performed in a baking furnace at a heating temperature of 800°C for a treatment time of 1 hour under a pressure of 0.5 MPa in an argon gas atmosphere. In Example 2, formation of Si-C network of polycarbosilane is estimated to proceed, and in Comparative Example 2, carbonization of straight phenol resin proceeds.

As for the finished molded product, a sample using polycarbosilane and straight phenol resin as the binder (Example 2) was obtained. Also, a sample with the same blending as in Example 2 except for changing the binder to only straight phenol resin (Comparative Example 2) was produced.

[Evaluation Results of Physical Properties]

Various physical properties of the sample after baking in Example 2 and Comparative Example 2 are shown in Table 2. Comparison therebetween revealed that samples equivalent in terms of physical properties and dimensional stability could be obtained.

[Friction Performance Results]

Performance test results are shown in Table 2. In Example 2, both the min $\mu$ and the fading ratio are excellent as compared with Comparative Example 2.

These results prove that polycarbosilane is effective as an alternative material for straight phenol resin which is the binder of an organic friction material.

<Example 3>

The prototype conditions/production flow of Example 3 are as follows.

1. Mixing of Raw Materials

Polycarbosilane (specific gravity: 1.1, average particle diameter: 10 $\mu$m), straight phenol resin (novolak type), graphite, alumina, steel wool and aluminum powder each in the blending amount shown in Table 3 were charged into an Eirich mixer and mixed/agitated at ordinary temperature for 2 minutes by setting the chopper rotation speed to 1,500 rpm and the pan rotation speed to 42 rpm.

[Table 3]

Table 3

|  |  | Example 3 |
|---|---|---|
| Blending of raw materials, blending amount (mass%) | Straight phenol | 2 |
|  | Pitch | 0 |
|  | Polycarbosilane | 8 |
|  | Graphite | 29 |
|  | Alumina | 19 |
|  | Steel wool | 38 |
|  | Aluminum powder | 4 |

(continued)

| | | Example 3 |
|---|---|---|
| Preformability | A: good, B: passed, C: bad | A |
| Thermoformability | A: good, B: passed, C: bad | B |
| Bulging after heating | bulged/none | none |
| Hardness (HRR) | After thermoforming | -3 |
| | After baking | 55 |
| Thickness (mm) | After thermoforming | 14.82 |
| | After baking | 14.75 |
| Second effectiveness | 50 km/h | 0.45 |
| | 100 km/h | 0.50 |
| | 130 km/h | 0.47 |
| 1st Fade | min $\mu$ | 0.48 |
| | Fading ratio [%] | 94 |
| | $IBT_{max}$ Rotor temperature (°C) | 502 |
| | $FBT_{max}$ Rotor temperature (°C) | 571 |
| Wear amount of pad (mm) | | 0.25 |
| Wear amount of rotor ($\mu$m) | | 7.00 |

2. Preforming

The mixture above was charged into a mold of a preforming press and pressed by a 200-t press under 300 MPa at ordinary temperature for 5 seconds to produce a sample (sample size: 100×50 mm).

3. Thermoforming

Thermoforming was performed at a molding temperature of 160°C under a surface pressure of 50 MPa for a molding time of 430 seconds.

4. Heat Treatment

The treatment was performed in a heating furnace at a heating temperature of 300°C for a treatment time of 10 hours under a pressure of 0.2 MPa in an oxidizing atmosphere.

5. Baking

Baking was performed in a baking furnace at a heating temperature of 800°C for a treatment time of 1 hour under a pressure of 0.5 MPa in an argon gas atmosphere.
In Example 3, a silicon-containing polymer was used, and the molded product is a sample produced by the conventional production method except that only the preforming condition was changed to high pressure in Example 3. In this connection, the preforming pressure of a normal organic friction material is from 25 to 35 MPa, and a pressure exceeding this range is called high pressure.

[Evaluation Results of Physical Properties]

Various physical properties after thermoforming and after baking in Example 3 are shown in Table 3. The extremely low hardness after thermoforming is attributable to increase in the blending amount of polycarbosilane having a relatively low binder force. However, good mechanical strength as a friction structure can be ensured by performing baking.

[Evaluation Results of Friction Performance]

The evaluation results of friction performance are shown in Table 3.

A friction performance comparable to Examples 1 and 2 of not employing high-pressure preforming was obtained.

These results reveal that high-pressure preforming is very effective for bulging prevention and does not adversely affect the friction performance and the wear. Also, as the added value, production by near net-shape is possible, and flaking as causing the preformed body to fail in becoming a compact to be adequately handleable and be collapsed does not occur, so that handling (handleability) can be improved.

<Example 4>

The prototype conditions/production flow of Example 4 are as follows.

1. Mixing of Raw Materials

Polycarbosilane (specific gravity: 1.1, average particle diameter: 10 $\mu$m), graphite, alumina, steel wool and aluminum powder each in the blending amount shown in Table 4 were charged into an Eirich mixer and mixed/agitated at ordinary temperature for 2 minutes by setting the chopper rotation speed to 1,500 rpm and the pan rotation speed to 42 rpm. In Example 4, unlike Examples 1 to 3, only polycarbosilane was used as the binder.

[Table 4]

Table 4

| | | Example 4 | Comparative Example 3 |
|---|---|---|---|
| Blending of raw materials, blending amount (mass%) | Straight phenol | 0 | 0 |
| | Pitch | 0 | 10 |
| | Polycarbosilane | 10 | 0 |
| | Graphite | 29 | 29 |
| | Alumina | 19 | 19 |
| | Steel wool | 38 | 38 |
| | Aluminum powder | 4 | 4 |
| Preformability | A: good, B: passed, C: bad | A | A |
| Thermoformability | A: good, B: passed, C: bad | B | C |
| Bulging after heating | bulged/none | none | |
| Hardness (HRR) | After thermoforming | -10 | |
| | After baking | 54 | |

(continued)

| | | Example 4 | Comparative Example 3 |
|---|---|---|---|
| Second effectiveness | 50 km/h | 0.45 | |
| | 100 km/h | 0.51 | |
| | 130 km/h | 0.44 | |
| 1st Fade | min $\mu$ | 0.45 | |
| | Fading ratio [%] | 94 | |
| | $IBT_{max}$ Rotor temperature (°C) | 518 | |
| | $FBT_{max}$ Rotor temperature (°C) | 640 | |
| Wear amount of pad (mm) | | 0.36 | |
| Wear amount of rotor ($\mu$m) | | 7.50 | |

2. Preforming

The mixture above was charged into a mold of a preforming press and pressed by a 200-t press under 300 MPa at ordinary temperature for 5 seconds to produce a sample (sample size: 100×50 mm).

3. Thermoforming

Thermoforming was performed at a molding temperature of 160°C under a surface pressure of 50 MPa for a molding time of 430 seconds.

4. Heat Treatment

The treatment was performed in a heating furnace at a heating temperature of 300°C for a treatment time of 10 hours under a pressure of 0.2 MPa in an oxidizing atmosphere.

5. Baking

Baking was performed in a baking furnace at a heating temperature of 800°C for a treatment time of 1 hour under a pressure of 0.5 MPa in an argon gas atmosphere.

In Comparative Example 3, only pitch was used as the binder, and mixing of raw materials, preforming and thermoforming were performed under the same conditions as in Example 4, but the compact after thermoforming underwent flaking and could not be used as an evaluation sample. Incidentally, in Comparative Example 3, the same numerals as in Example 4 are used because of correspondence relation with Example 4.

[Evaluation Results of Physical Properties]

Various physical properties after thermoforming and after baking in Example 4 are shown in Table 4.

[Evaluation Results of Friction Performance]

Evaluation results of friction performance are shown in Table 4.

<Examples 5 to 8>

The prototype conditions/production flow of Example 5 are as follows.

1. Mixing of Raw Materials

Polycarbosilane (specific gravity: 1.1, average particle diameter: 10 μm), graphite, alumina, steel wool and aluminum powder each in the blending amount shown in Table 5 were charged into an Eirich mixer and mixed/agitated at ordinary temperature for 2 minutes by setting the chopper rotation speed to 1,500 rpm and the pan rotation speed to 42 rpm. In Example 5, only polycarbosilane was used as the binder, similarly to Example 4.

[Table 5]

Table 5

| Name of Material | Blending Amount (mass%) |
| --- | --- |
| Polycarbosilane | 10 |
| Graphite | 27 |
| Alumina | 42 |
| Steel wool | 17 |
| Aluminum powder | 4 |

2. Preforming

The mixture above was charged into a mold of a preforming press and pressed by a 200-t press under 25 MPa at ordinary temperature for 5 seconds to produce a sample (sample size: 100×50 mm).

3. Thermoforming

Thermoforming was performed at a molding temperature of 160°C under a surface pressure of 50 MPa for a molding time of 430 seconds.

4. Heat Treatment

The treatment was performed in a heating furnace at a heating temperature of 300°C for a treatment time (keeping time) of 10 hours under a pressure of 0.2 MPa in an oxidizing atmosphere.

5. Baking

Baking was performed in a baking furnace at a heating temperature of 1,000°C for a treatment time of 2 hours under a pressure of 0.5 MPa in an argon gas atmosphere.
In Examples 6 to 8, each friction material was produced in the same manner as in Example 5 except for performing the heat treatment in a heating furnace under the following conditions. In all of Examples 5 to 8, preformability and thermoformability were good (A), and bulging after heating was not observed.

(Example 6)

In a heating furnace, heating was performed for 1 hour by raising the temperature to 160-300°C at a temperature rise rate of 140°C/hour (no keeping time).

(Example 7)

In a heating furnace, heating was performed for 10 hours by raising the temperature to 160-300°C at a temperature rise rate of 14°C/hour (no keeping time).

(Example 8)

In a heating furnace, heating was performed for 5 hours by raising the temperature to 160-300°C at a temperature rise rate of 28°C/hour (no keeping time).

[Evaluation Results of Physical Properties]

Various physical properties after thermoforming and after baking in Examples 5 to 8 are shown in Table 6.

[Table 6]

Table 6

| | | Example 5 | Example 6 | Example 7 | Example 8 |
|---|---|---|---|---|---|
| After completion of thermoforming (160°C) | Width (1) (W$_1$) | 50.38 | 50.29 | 50.37 | 50.32 |
| | Width (2) (W$_2$) | 100.30 | 100.32 | 100.35 | 100.30 |
| | Thickness (t) | 13.48 | 13.45 | 13.60 | 13.38 |
| After completion of baking (1000°C) | Width (1) (W$_1$) | 50.44 | 50.53 | 50.39 | 50.36 |
| | Width (2) (W$_2$) | 100.28 | 100.35 | 100.33 | 100.36 |
| | Thickness (t) | 13.63 | 13.73 | 13.83 | 13.67 |
| Hardness (HRR) | After thermoforming | 56 | 65 | 71 | 69 |
| | After baking | 87 | 85 | 85 | 81 |

In all of Examples 5 to 8, there was no difference in both the dimensional change and the hardness, and a good friction material with no leaching of the binder could be obtained, but in Examples 5 and 6, the product adhered to the separator at the heat treatment (curing) stage and was difficult to take out. As the cause thereof, the silicon-containing polymer is considered to have flowed out and played a role as an adhesive.

On the other hand, in Example 7, slight outflow was confirmed on the side surface of the product, but the product did not adhere to the separator and could be easily taken out. In Example 8, adhesion to the separator was not caused and outflow was not confirmed.

For preventing outflow of the silicon-containing polymer, control of the process of reaching the infusiblization preset temperature is effective, and it is presumed that by balancing the crosslinking reaction with oxygen and melting (outflow) of the silicon-containing polymer through low-rate temperature rise control as applied in Examples 7 and 8, leaching/outflow of the silicon-containing polymer could be successfully suppressed.

Fig. 2 shows the mapping results of silicon element in Examples 5 and 8. These results reveal that the silicon content is larger in the friction material of Example 8 than in the friction material of Example 5. It is understood that controlling the infusiblization treatment at a low temperature rise rate is more advantageous to the formation of a dense ceramic network so as to prevent outflow of the silicon-containing polymer.

<Examples 9 and 10>

In Examples 9 and 10, each friction material was produced by the same production method as in Example 5 by using the same raw materials as in Example 5 except that the heat treatment in the heating furnace of Example 5 was performed under the following conditions and the heating temperature during baking was changed to 800°C. In both of Examples 9 and 10, the preformability and thermoformability were good (A), and bulging after heating was not observed.

(Example 9)

In a heating furnace, heating was performed for 10 hours by raising the temperature to 160-300°C at a temperature rise rate of 14°C/hour (no keeping time).

(Example 10)

In a millimeter-wave heating device, heating was performed for 1 hour by raising the temperature to 160-300°C at a temperature rise rate of 140°C/hour (no keeping time).

[Evaluation Results of Physical Properties]

Various physical properties after thermoforming, after heat treatment and after baking in Examples 9 and 10 are shown in Table 7.

[Table 7]

Table 7

| | | Example 9 | Example 10 |
|---|---|---|---|
| After completion of thermoforming (160°C) | Width (1) ($W_1$) | 50.26 | 50.23 |
| | Width (2) ($W_2$) | 100.22 | 100.23 |
| | Thickness (t) | 12.66 | 12.67 |
| After completion of heat treatment (300°C) | Width (1) ($W_1$) | 50.28 | 50.40 |
| | Width (2) ($W_2$) | 100.27 | 100.58 |
| | Thickness (t) | 12.69 | 13.07 |
| After completion of baking (800°C) | Width (1) ($W_1$) | 50.34 | 50.35 |
| | Width (2) ($W_2$) | 100.29 | 100.30 |
| | Thickness (t) | 13.03 | 13.08 |
| Hardness (HRR) | After thermoforming | 86 | 81 |
| | After heat treatment | 104 | 88 |
| | After baking | 85 | 84 |

In all of Examples 9 and 10, there was no difference in both the dimensional change and the hardness, and a good friction material with no leaching of the binder could be obtained. As in Example 10, by performing millimeter-wave heating, a good infusiblization treatment could be effected in a short time. This is considered to result because the material itself generates heat by the millimeter-wave heating and therefore, the sample as a whole can be uniformly heat-treated in a short time as compared with normal heat treatment. It is presumed that in the normal heat treatment, curing by infusiblization and melting/leaching of the unreacted portion in the inside due to temperature rise are repeated to fluidly effect the infusiblization, and therefore, a heat treatment for a long time is required, but in the case of millimeter-wave heating, since the material itself generates heat, an infusiblization reaction is accelerated in whole and this enables an infusiblization treatment in a short time.

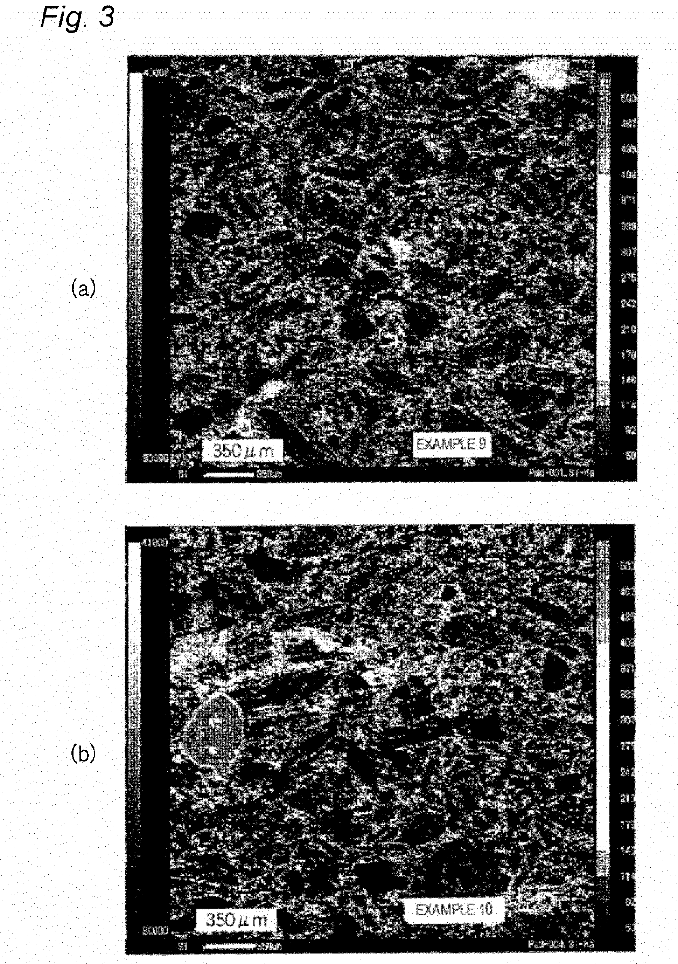

Fig. 3 shows the mapping results of silicon element in Examples 9 and 10. These results reveal that in both cases, the silicon content is almost the same. It is understood that controlling the infusiblization treatment at a low temperature rise rate is more advantageous to the formation of a dense ceramic network so as to prevent outflow of the silicon-containing polymer and at the same time, in the heat treatment by millimeter-wave heating, a dense ceramic network is similarly formed in a short time while suppressing outflow of the silicon-containing polymer.

This application is based on Japanese Patent Application (Patent Application No. 2009-290886) filed on December 22, 2009.

INDUSTRIAL APPLICABILITY

The friction material of the present invention produced by infusiblizing and baking a silicon-containing polymer as a binder makes it possible to produce a highly heat-resistant brake pad with excellent braking performance by utilizing the existing production equipment. Accordingly, the friction material of the present invention is useful as a highly heat-resistant friction material that is used, for example, as a brake pad, a brake lining or a clutch facing in automobiles, railroad vehicles, and industrial machines.

## Claims

1. A method for producing a friction material comprising a fibrous material, a friction modifier, a binder and an inorganic material, the production method comprising at least preforming, thermoforming and heat treatment steps, comprising blending a fibrous material, an inorganic material, a friction modifier, being selected from the group of graphite, iron, aluminum, copper, brass and bronze, as well as combinations thereof, and a binder, wherein said binder comprises a silicon-containing polymer and the inorganic material includes at least one of zirconia, alumina, titania, magnesia, calcium fluoride, boron nitride and SiC;
   thermoforming under the conditions of a temperature of 150 to 180°C,
   heat treatment of the polymer in an oxidizing atmosphere at a temperature of 160 to 350°C for 1 to 10 hours, after thermoforming, to cause crosslinking with oxygen and then,
   subjecting to a baking treatment at a temperature of 800 to 1,000°C for 1 to 2 hours.

2. The method for producing a friction material as set forth in claim 1, wherein the temperature rise rate of the heat treatment in an oxidizing atmosphere is from 14 to 140°C per hour.

3. The method for producing a friction material as set forth in claim 1 or 2, wherein the heat treatment in an oxidizing atmosphere is performed using millimeter-wave heating.

4. The method for producing a friction material as set forth in any one of claims 1 to 3, wherein said preforming is performed under a pressure of 25 to 300 MPa.

## Patentansprüche

1. Verfahren zur Herstellung eines Reibungsmaterials, umfassend ein Fasermaterial, ein Reibungsmodifizierer, ein Bindemittel und ein anorganisches Material, wobei das Herstellungsverfahren mindestens Vorformungs-, Thermoformungs- und Wärmebehandlungsschritte umfasst, umfassend
   Mischen eines Fasermaterials, eines anorganischen Materials, eines Reibungsmodifizierer, ausgewählt aus der Gruppe von Graphit, Eisen, Aluminium, Kupfer, Messing und Bronze sowie Kombinationen davon, und eines Bindemittels, wobei das Bindemittel ein silikonhaltiges Polymer umfasst und das anorganische Material mindestens eines von Zirkoniumdioxid, Aluminiumoxid, Titandioxid, Magnesiumoxid, Calciumfluorid, Bornitrid und SiC enthält;
   Thermoformen unter den Bedingungen bei einer Temperatur von 150 bis 180°C,
   Wärmebehandlung des Polymers in einer oxidierenden Atmosphäre bei einer Temperatur von 160 bis 350°C für 1 bis 10 Stunden nach dem Thermoformen, um eine Vernetzung mit Sauerstoff zu bewirken, und dann,
   Unterziehen einer Einbrennbehandlung bei einer Temperatur von 800 bis 1000°C für 1 bis 2 Stunden.

2. Verfahren zur Herstellung eines Reibungsmaterials nach Anspruch 1, wobei die Temperaturanstiegsrate der Wärmebehandlung in einer oxidierenden Atmosphäre 14 bis 140°C pro Stunde beträgt.

3. Verfahren zur Herstellung eines Reibungsmaterials nach Anspruch 1 oder 2, wobei die Wärmebehandlung in einer oxidierenden Atmosphäre unter Verwendung von Millimeterwellenerwärmung durchgeführt wird.

4. Verfahren zur Herstellung eines Reibungsmaterials nach einem der Ansprüche 1 bis 3, wobei die Vorformung unter einem Druck von 25 bis 300 MPa durchgeführt wird.

## Revendications

1. Procédé de production d'un matériau de frottement comprenant un matériau fibreux, un modificateur de frottement, un liant et un matériau inorganique, le procédé de production comprenant au moins des étapes de préformage, de thermoformage et de traitement thermique, comprenant:

   le mélange d'un matériau fibreux, d'un matériau inorganique, d'un modificateur de frottement, étant choisi dans le groupe composé du graphite, du fer, de l'aluminium, du cuivre, du laiton et du bronze, ainsi que de leurs combinaisons, et d'un liant, dans lequel ledit liant comprend un polymère contenant du silicium et le matériau inorganique comprend au moins l'un des éléments suivants : zircone, alumine, oxyde de titane, magnésie, fluorure de calcium, nitrure de bore et SiC;
le thermoformage dans des conditions de température de 150 à 180°C,
le traitement thermique du polymère en atmosphère oxydante à une température de 160 à 350°C pendant 1 à 10 heures, après thermoformage, pour provoquer une réticulation avec l'oxygène, puis
un traitement de cuisson à une température de 800 à 1 000 °C pendant 1 à 2 heures.

2. Procédé de production d'un matériau de frottement selon la revendication 1, dans lequel la vitesse d'élévation de température du traitement thermique dans une atmosphère oxydante est de 14 à 140°C par heure.

3. Procédé de production d'un matériau de frottement selon les revendications 1 ou 2, dans lequel le traitement thermique dans une atmosphère oxydante est effectué en utilisant un chauffage à ondes millimétriques.

4. Procédé de production d'un matériau de frottement selon l'une quelconque des revendications 1 à 3, dans lequel ledit préformage est réalisé sous une pression de 25 à 300 MPa.

*Fig. 1*

*Fig. 2*

(a)

(b)

*Fig. 3*

(a)

350μm

EXAMPLE 9

(b)

350μm

EXAMPLE 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0699728 A
- DE 19823521
- US 20050276961 A
- JP 2006306970 A
- JP 11132270 A
- JP 3051531 A
- JP 7292349 A
- JP 2003232392 A
- JP 2003145565 A
- JP 2003127155 A
- JP 2009290886 A